# EUROPEAN PATENT SPECIFICATION

(11) **EP 2 225 485 B1**
(45) Date of publication and mention of the grant of the patent: **14.09.2011**
(21) Application number: 08850670.4
(22) Date of filing: 12.11.2008
(51) Int. Cl.: F16K 27/00

(54) **A VALVE MANIFOLD**
VENTILVERTEILER
COLLECTEUR DE SOUPAPE

(30) Priority: 13.11.2007 GB 0722224
(43) Date of publication of application: 08.09.2010
(73) Proprietor: Bifold Fluidpower Limited, Middleton Manchester M24 1SW (GB)
(72) Inventor: RENSHAW, James, Robert, Cheshire SK9 6HD (GB); BALMFORTH, Jonathan, Edward, Huddersfield HD2 1PS (GB)
(74) Representative: Every, David Aidan
(86) International application number: PCT/GB2008/003807
(87) International publication number: WO 2009/063192

(56) References cited:
- US-A- 6 026 843
- US-A1- 2001 032 516
- US-B1- 6 176 262

## Description

The present invention relates to a valve manifold for connection between a main process flow conduit and at least one fluid sensor, gauge or the like. It also relates to a valve manifold assembly comprising a plurality of such manifolds.

Document US 6 026 843 discloses a valve manifold system.

It is often necessary to determine characteristics of fluid flow in a main process flow conduit, such as, for example fluid pressure or temperature. The traditional approach to sensing such parameters is to introduce a reducer into the main flow conduit and to connect a sensor or gauge to the conduit at a position adjacent to the reducer. A valve manifold is disposed between the sensor or gauge and the main process flow conduit and connected to the latter by a branch pipe. The arrangement allows for the pressure or other characteristic of the fluid flow to be determined without significant flow of fluid through the manifold as well as permitting venting as required. In some applications it may be necessary to have multiple branch pipes (including, for example, T-pieces and/or elbow connectors) and reducers disposed along the length of the main flow conduit.

The manifolds of the kind described above can be bulky and difficult to install. In applications where the manifold and gauge are heavy they can impart a significant load on the connection between the branch pipes and main conduit. Moreover, there are many connections between the manifold, the sensor or gauge, the branch pipe and the main flow conduit that give rise to potential sources of leakage.

It is an object of the present invention, amongst others, to obviate or mitigate the aforesaid disadvantages and/or to provide for an alternative or improved valve manifold.

According to the present invention there is provided a valve manifold for connection into a fluid flow conduit and for connection to a sensor for sensing a fluid flow characteristic, the manifold comprising at least one body penetrated by a main passage having an inlet and an outlet for connection into the flow conduit, a sensor outlet port to which the sensor is connectable and a branch conduit in the body extending between the main passage and the sensor outlet port, the branch conduit having a bleed passage with an outlet bleed port, a first isolation valve in the branch conduit between the main passage and the sensor outlet port.

A bleed isolation valve may be provided in the bleed passage between the main passage and the outlet bleed port.

The fluid flow characteristic sensed by the sensor may be, for example, the pressure or temperature, but other characteristics are not excluded. The provision of a main passage through the body of the manifold allows it to be connected in-line with the fluid flow conduit rather than it being connected to a side port or branch pipe. This is particularly advantageous in many respects including for example the fact that it reduces the potential leak paths and renders the arrangement compact and stable. The main passage through the manifold is preferably, but not necessarily, straight so that the flow of fluid through the conduit is substantially unaffected. There may be a plurality of such manifolds connected together to form a manifold assembly in which case the main passages are substantially aligned so as to allow the assembly to be connected conveniently in line with the flow conduit. The manifold is of a modular nature to allow easy assembly. In such an assembly each manifold may have substantially the same footprint.

The provision of a bleed passage conveniently allows the pressure in the branch conduit to be vented before removal or replacement of a sensor which is connected to the sensor outlet port.

The body of the manifold may take any suitable form but is ideally of a compact configuration. It may be of unitary construction.

There may be a second isolation valve in the branch conduit between the first isolation valve and the sensor outlet port. The bleed passage may extend from a position between the first and second isolation valves. Thus when the bleed valve is opened it may vent pressure in the branch conduit between the two isolation valves through the bleed passage to the outlet bleed port.

At least one valve cavity may be defined in the valve body for receiving one of the isolation valves. The valve or valves may be fitted in the cavity with a threaded connection or otherwise. The valves may comprises a valve stem that is movable to move a valve element from a closed position where it is seated on a seat defined by the respective valve cavity and blocks fluid communication and an open position where the valve element is clear of the valve seat. The stem may be rotatable and the element may be a ball, for example.

There may be a first valve cavity in which the first isolation valve is received. In addition, or alternatively, there may be a second valve cavity in which the second isolation valve is received and, in addition or alternatively there may be a third valve cavity in which the bleed isolation valve is received.

A first fluid passage may be defined in the body between the main passage and the first valve cavity. The passage thus interconnects the main passage the first valve so that when the first valve is open the fluid pressure and/or temperature is transmitted downstream of the first valve. There may be a second passage extending between the first valve cavity and the second valve cavity and a third fluid passage extending between the first valve cavity and the third valve cavity.

The branch conduit may comprise a sensor outlet passage extending, at least in part, from the second valve cavity to the sensor outlet port.

The bleed passage may extend from the third valve cavity to the outlet bleed port.

The body of the manifold may comprise an upper surface in which the valve cavities are defined. The body may have a substantially rectangular footprint and may further comprise a lower surface opposite the upper surface, opposed side surfaces and opposed end surfaces between the side surfaces.

At least part of the upper surface may be inclined relative to the lower surface. The second and third valve cavities may be defined on the inclined parts of the upper surface.

The main passage may extend between end surfaces of the body. The bleed port may be defined in a side surface of the body, as may be the gauge port. They may be defined on opposite surfaces.

In an embodiment where there is more than one manifold compiled into a manifold assembly, the manifolds may interface at respective end surfaces with one or more outer manifolds flanking a primary manifold. The manifolds may be fixed together by one or more fixings such as bolts or the like. Interfacing seals may be provided at the junction between the main passages.

The arrangement of the first and second isolation valves, the bleed valve and the interconnecting passages may form a double block and bleed valve arrangement in the branch conduit.

Specific embodiments of the present invention will now be described, by way of example only, with reference to the accompanying drawings in which:
Figure 1 is a diagrammatic representation of a first embodiment of the present invention in which there is a valve manifold assembly having three double block and bleed valve manifolds;
Figure 2 is a first end view of the valve manifold assembly of figure 1;
Figure 3 is a second end view of the valve manifold assembly of figure 2;
Figure 4 is a first side view of the valve manifold assembly of figure 2;
Figure 5 is a second side view of the valve manifold assembly of figure 2;
Figure 6 is a plan view of the valve manifold assembly of figure 2;
Figure 7 is an underneath plan view of the valve manifold assembly of figure 3;
Figure 8 is a perspective view a single valve manifold of figures 1 to 7, shown with the valves removed;
Figure 9 is a plan view of the manifold of figure 8;
Figure 10 is a sectioned view along line A-A of figure 9;
Figure 11 is a sectioned view along line C-C of figure 9;
Figure 12 is a sectioned view of part of the single valve manifold of figures 8 to 11 in accordance with the present invention and shown with valves in place;
Figure 13 is a diagrammatic representation of a second embodiment of the present invention in which there is a valve manifold assembly incorporating two double block and bleed valve manifolds;
Figure 14 is a side view of the valve manifold assembly of figure 13; and
Figure 15 is a plan view of the valve manifold assembly of figure 13.

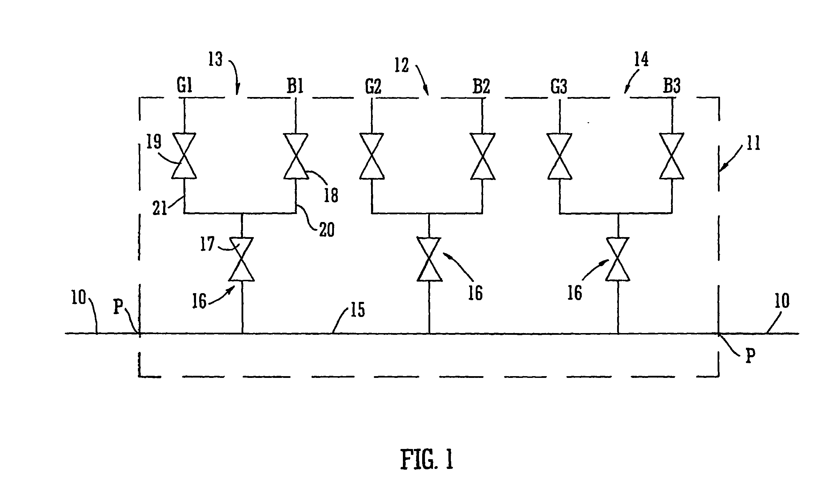

Referring first to figure 1 a process fluid flow conduit 10 is fitted with an in-line manifold assembly 11 comprising three double block and bleed valve manifolds 12, 13, 14 to each of which a gauge (not shown) may be fitted. The manifold assembly 11 has a main passage 15 with ports P for connection in-line with the process fluid flow conduit 10 and branch conduits 16 that are sub-divided downstream into outlet passages terminating in ports G1, G2, G3 for connection to respective gauges (not shown) and bleed ports B1, B2, B3. Each manifold 12, 13, 14 supports three valves 17, 18 and 19 that are disposed between the process flow conduit 10 and the ports G1-G3 and B1-B3. A primary isolation valve 17 in the branch conduit 16 controls the transmission of fluid pressure from the process flow conduit 10 to a bleed valve 18 disposed in a bleed passage 20 associated with the bleed port B1, B2 or B3 and a second isolation valve 19 disposed in a respective outlet gauge passage 21 associated with a respective gauge port G1, G2, G3.

In operation, in order to take readings from a gauge of a particular manifold 12, 13 or 14 the primary and secondary isolation valves 17, 19 in the manifold are opened so that fluid pressure and/or temperature is transmitted to the gauge via passage 21 whilst the process flow in the flow conduit 10 and main passage 15 remains uninterrupted. When the gauge is not in use, requires servicing, replacement or otherwise, the primary and secondary isolation valves 17, 19 are closed and the bleed valve 18 is opened to allow the pressure between the isolation valves 17, 19 to vent through the bleed port B1, B2 or B3 to atmosphere, or otherwise, and to check there is no leakage past the primary isolation valve 17. The gauge can then be removed, replaced or exchanged.

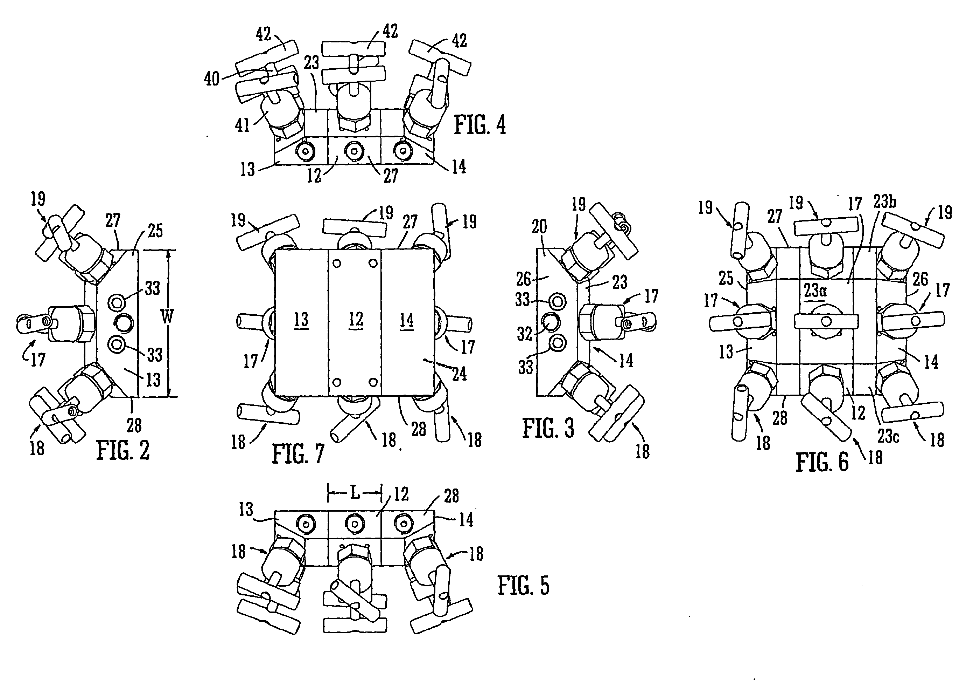

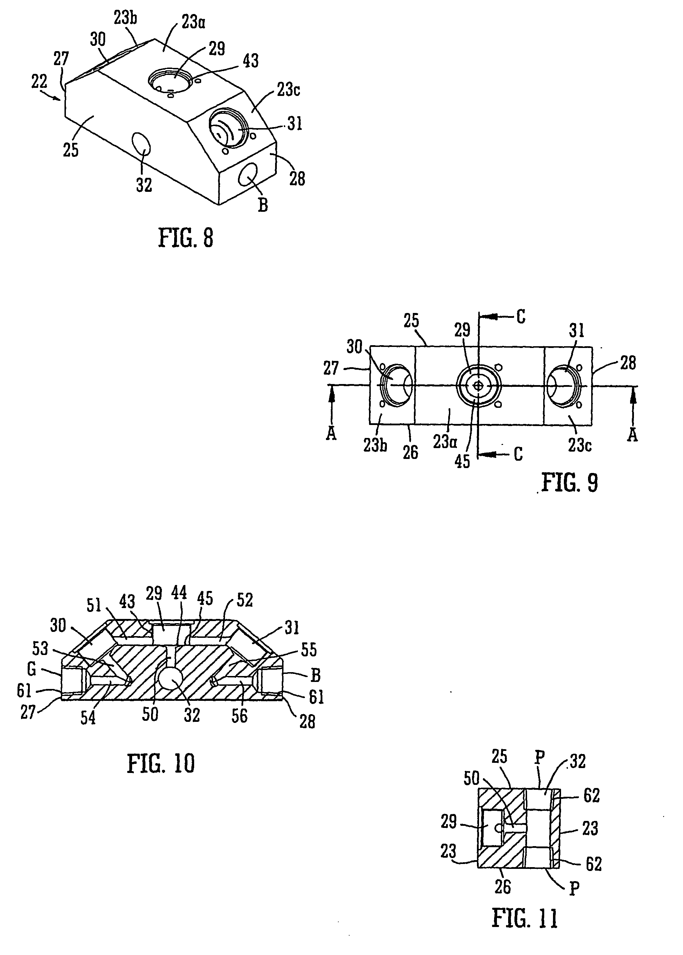

An example of the three-part manifold assembly 11 is shown in figures 2 to 7, in which a central manifold 12 (represented in more detail in figures 8 to 11) is flanked by outer manifolds 13, 14, each of the manifolds having the same rectangular footprint (see underneath plan view in figure 7) and combining to form the manifold assembly 11 that is fitted into the process flow conduit 10. The three manifolds 12, 13, 14 are of similar configuration in that each comprises a unitary body 22 having a relatively short length L (fig. 5) in the direction of the process flow and a relatively long width W (fig. 2) in the perpendicular direction. Each body 22 defines an upper surface 23 on which each of the valves 17, 18, 19 is supported, a lower surface 24 for mounting on a support plate (not shown), end surfaces 25, 26 for interfacing with another of the manifolds or the process flow conduit and side surfaces 27, 28 at which the gauge and bleed ports G1-3, B1-3 emerge. The upper surface 23 of each manifold 12, 13, 14 has a central section 23a in which there is defined a first cavity 29 (see figures 8 to 11) for receipt of the primary isolation valve 17 and which is flanked by side sections 23b, 23c having second and third cavities 30, 31 respectively for receiving the secondary isolation valve 19 and the bleed valve 18 respectively, those side sections 23b, 23c of the upper surface 23 being inclined downwardly to the side surfaces 27, 28. In the case of the central manifold 12, the central section 23a of the upper surface 23 is generally horizontal and parallel to the lower surface 24, whereas for the outer manifolds 13, 14 the upper surface 23 is partly inclined downwardly towards the end surfaces 25, 26.

Each manifold body 22 is penetrated along its length by a central passage 32 that extends between the end surfaces 25, 26. In addition, each is provided with parallel fixing bores 33 by which the manifolds 12, 13, 14 are bolted together. The fixing bores 33 in the outer manifolds 13, 14 extend between the end surfaces 25, 26 and are not threaded whereas the aligned fixing bores 33 in the central manifold 12 are blind and threaded. The manifold assembly 11 is connected together by bolts that pass through the bores 33 in the outer manifolds 13, 14 and connect in threaded engagement with the blind bores 33 in the central manifold 12. When the three manifolds 12, 13, 14 are combined in the assembly 11 the respective central passages 32 are aligned coaxially to form the continuous main passage 15 for connection into the main process flow conduit 10 such that the process fluid flows through each manifold 12, 13, 14.

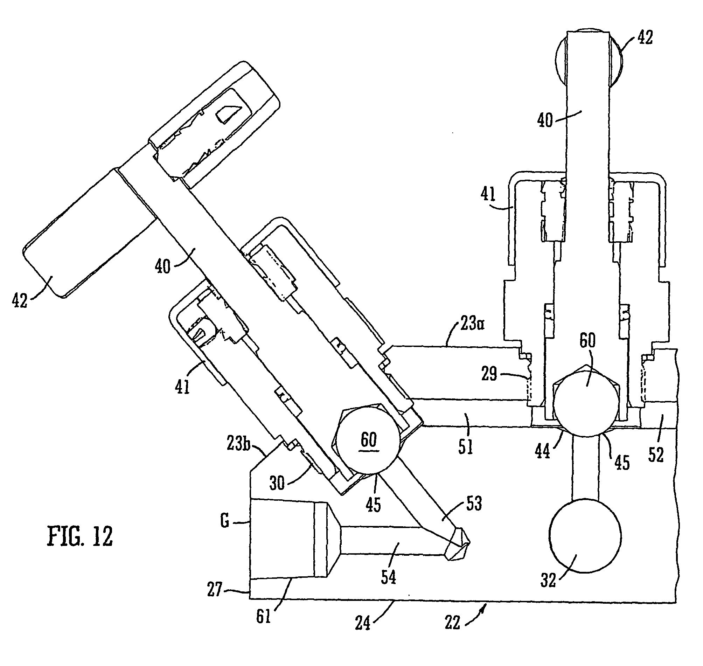

The valves 17, 18, 19 illustrated in figure 2 onwards are of the needle valve type, although it will be understood that other valves types may be used to achieve the same effect. Each valve has a valve stem 40 that extends into its respective valve cavity 29, 30, 31 and which is supported by a generally cylindrical bonnet 41 that is exterior to the valve cavity. The exposed end of the valve stem 40 terminates in a handle 42 that is rotatable to operate the valve. The structure of an exemplary valve is described in more detail below with reference to figure 12 but the valve bonnet 41 and the handle 42 of each valve is visible in figures 2 to 7.

The internal configuration of the centre manifold 12 is illustrated in figure 8 to 11, the other manifolds 13, 14 in the assembly 11 being similarly configured. Each of the valve cavities 29, 30, 31 is defined by a threaded bore having a cylindrical side wall 43 and a base wall 44 defining a valve seat 45. A series of internal passages interconnect the central passage 32, the valve cavities 29, 30, 31 and the bleed and gauge ports B1-3, G1-3 and thus serve to define the branch conduit 16 including the outlet bleed and gauge passages 20, 21 described in relation to figure 1. These passages are best seen in figure 10. The first internal passage 50 depends vertically downwardly from the base wall 44 of the first cavity 29 and interconnects the cavity 29 and the central passage 32 so as to define an upstream portion of the branch conduit 16. At the side wall 43 of the cavity 29 there are diametrically opposed second and third internal passages 51, 52 extending radially outwards and which interconnect the first cavity 29 and the second and third cavities 30, 31 respectively, thereby defining first parts of the outlet gauge and bleed passages 21, 20 in a downstream portion of the branch conduit 16. A fourth internal passage 53 extends downwardly and inwardly from the base wall 44 of the second cavity 30 in an inclined direction and meets with a fifth internal passage 54 that extends in a generally horizontal direction and is connected to the gauge port G. The fourth and fifth passages 53, 54 thus complete that part of the outlet gauge passage 21 that is downstream of the secondary isolation valve 19. The third cavity 31 similarly has a sixth internal passage 55 that extends in an inclined direction downwardly and inwardly from the cavity 31 and meets with a seventh internal passage 56 that connects to the bleed port B, the sixth and seventh passages 55, 56 combining to define a downstream portion of the outlet bleed passage 20.

The needle valves 17, 18, 19 are of the ball-end type with a general configuration that is known in the art and is not therefore described in detail. Each of the valves is threadedly engaged in the threaded bore of the respective valve cavity 29, 30 or 31 as can be seen in figure 12 and comprises the elongate valve stem 40 that is rotatably supported in the bonnet 41 that screws into the threaded bore of the valve cavity 29, 30 or 31. As described above, the end of the valve stem 40 that is external to the manifold body has a handle 42 by which the stem 40 may be rotated in order to operate the valve. The other end of the stem 40 supports a ball end 60 that serves to seal against the valve seat 45 of the cavity when in a closed position as depicted in figure 12. In this position the ball 60 blocks fluid communication between the internal passages 50-56 that connect to the valve cavity 29, 30 or 31. For instance, in the example of the primary isolation valve 17 and the first cavity 29 the ball 60 blocks communication between the first, second and third internal passages 50, 51 and 52 so that the pressure in the branch conduit 16 generated by the flow of the process fluid in the central passage 32 is not transmitted to the outlet bleed or gauge passages 20, 21. In order to open the valves 17, 18 or 19 the handle 42 is rotated so that the valve stem is lifted (via a threaded engagement with the bonnet 41) and the ball 60 moves clear of the passages 50-56 so as to allow the transmission of pressure.

The inclined side sections 23b, 23c of the upper surface 23 of each manifold 12, 13 or 14 serve the purpose of allowing the valve cavities 29-31 and therefore the valves 17-19 to be inclined relative to one another so that there is sufficient clearance between the valve handles 42 to allow for them to be manipulated with ease whilst maintaining the compact configuration of the manifold assembly 11.

Each of the gauge and bleed ports G1-3, B1-3 has a standard NPT threaded connection feature 61 so as to permit connection to other conduits. Similarly the ends of the main passage 15 which emerge on the end surfaces 25, 26 of the outer manifolds 13, 14 have NPT connection features 62 so as to permit connection to the process fluid flow conduit 10.

The interfacing end surfaces 25, 26 of the central and outer manifolds 12, 13, 14 have face seals such as O-rings disposed around the central passage 32 so as to prevent leakage.

The provision of a central passage 32 through each manifold 12, 13, 14 which combines with the other such passages 32 to define a common main passage 15 through the manifold assembly 11 enables the assembly to be disposed in line with the main process flow conduit 10 whilst still allowing gauge readings to be taken without interrupting the flow. This means that the number of potential leak sites and paths is significantly reduced, particularly by eliminating the need for T-piece or elbow connectors or the like, resulting in reduced cost and improve reliability. The assembly 11 is conveniently modular, compact and can be embodied in any suitable scale. Moreover, the assembly is stable and does not put undue load or strain on the connections to the main flow conduit 10.

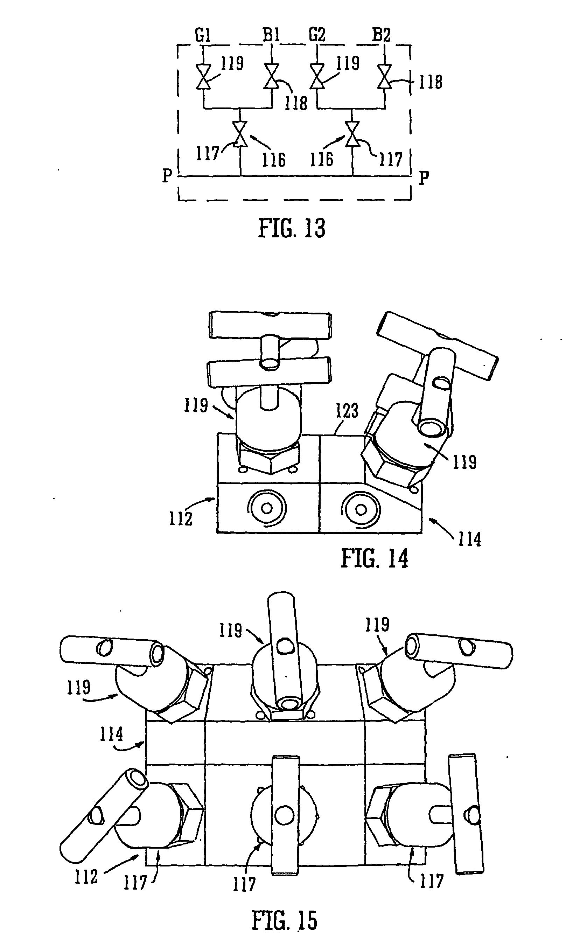

The second manifold assembly of figures 13 to 15 has only two manifolds arranged in a side-by-side relationship. For convenience and ease of understanding components that are common to the aforedescribed first embodiment are given the same reference numerals but increased by 100. The manifolds 112,113 are identical to the central manifold 12 and one of the outer manifolds 13 of the figure 1 to 7 embodiment and need no further discussion. It will be understood that the manifold assembly 111 could simply comprise a single manifold such as, for instance, the central manifold 12 of figures 1 to 7 or could include more than three manifolds in which case there may be more than one central manifold arranged in a side-by-side relationship, although spacers may be required to provide sufficient separation between adjacent valve handles so that they are readily manipulable.

It will be appreciated that numerous modifications to the above described design may be made without departing from the scope of the invention as defined in the appended claims. For example, the valve types need not necessarily be needle valves with ball ends or indeed needle valves. Any convenient type of valve may be used in the manifold assembly. Although the valve manifolds are described in relation to mounting pressure or temperature sensors or gauges, they may be used to support other types of sensors or transducers. In one embodiment the valve manifold may have a single isolation valve, a gauge outlet and a bleed outlet passage without a bleed valve.

The described and illustrated embodiments are to be considered as illustrative and not restrictive in character, it being understood that only the preferred embodiments have been shown and described and that all changes and modifications that come within the scope of the inventions as defined in the claims are desired to be protected. It should be understood that while the use of words such as "preferable", "preferably", "preferred" or "more preferred" in the description suggest that a feature so described may be desirable, it may nevertheless not be necessary and embodiments lacking such a feature may be contemplated as within the scope of the invention as defined in the appended claims. In relation to the claims, it is intended that when words such as "a," "an," "at least one," or "at least one portion" are used to preface a feature there is no intention to limit the claim to only one such feature unless specifically stated to the contrary in the claim. When the language "at least a portion" and/or "a portion" is used the item can include a portion and/or the entire item unless specifically stated to the contrary.

## Claims

1. A valve manifold (12,13,14) for connection into a fluid flow conduit (10) and for connection to a sensor for sensing a fluid flow characteristic, the manifold comprising a body (22) penetrated by a main passage (15) having an inlet and an outlet (8) for connection into the flow conduit (10), a sensor outlet port (G₁,G₂,G₃) to which the sensor is connectable and a branch conduit (16) in the body extending between the main passage and the sensor outlet port, the branch conduit having a bleed passage (20) with an outlet bleed port (B₁,B₂,B₃), a first isolation valve (17) in the branch conduit (16) between the main passage and the sensor outlet port and a bleed isolation valve (18) in the bleed passage (20) between the main passage and the outlet bleed port.

2. A valve manifold according to claim 1, wherein there is provided a second isolation valve (19) in the branch conduit (21) between the first isolation valve (17) and the sensor outlet port (G₁,G₂G₃) the bleed passage (20) extending from a position between the first (17) and second (19) isolation valves.

3. A valve manifold according to claim 1 or 2, wherein at least one valve cavity is defined in the valve body for receiving one of the isolation valves.

4. A valve manifold according to claim 2, wherein there is provided a first valve cavity in which the first isolation valve is received, a second valve cavity in which the second isolation valve is received and a third valve cavity in which the bleed isolation valve is received.

5. A valve manifold according to claim 4, wherein a first fluid passage is defined in the body between the main passage and the first valve cavity.

6. A valve manifold according to claim 5, further comprising a second passage extending between the first valve cavity and the second valve cavity.

7. A valve manifold according to claim 6, further comprising a third fluid passage extending between the first valve cavity and the third valve cavity.

8. A valve manifold according to any one of claims 4 to 7, further comprising a sensor outlet passage extending, at least in part, from the second valve cavity to the sensor outlet port.

9. A valve manifold according to any one of claims 4 to 8., wherein the bleed passage extends from the third valve cavity to the bleed port.

10. A valve manifold according to any one of claims 3 to 9, wherein the body of the manifold comprises an upper surface in which the valve cavities are defined.

11. A valve manifold according to claim 10, wherein the body of the manifold further comprises a lower surface opposite the upper surface, opposed side surfaces and opposed end surfaces between the side surfaces.

12. A valve manifold according to claim 10, wherein at least part of the upper surface is inclined relative to the lower surface.

13. A valve manifold according to claim 12, wherein the second and third valve cavities are defined on the inclined parts of the upper surface.

14. A valve manifold according to any one of claims 11 to 13, wherein the main passage extends between end surfaces of the body

15. A valve manifold according to any one of claims 11 to 14, wherein the bleed port is defined in a side surface of the body.

16. A valve manifolds according to any one of claims 11 to 15, wherein the gauge port is defined in a side surface of the body.

17. A valve manifold assembly comprising a plurality of valve manifolds according to any preceding claim, the plurality of manifolds being connected together such that the respective main passages are in alignment.

## Patentansprüche

1. Ventilverteiler (12, 13, 14) für einen Anschluss in eine Strömungsleitung (10) und für eine Verbindung mit einem Sensor für das Messen einer Strömungscharakteristik, wobei der Verteiler aufweist: ein Gehäuse (22), das von einem Hauptdurchgang (15) durchdrungen wird, mit einem Einlass und einem Auslass (8) für einen Anschluss in die Strömungsleitung (10); eine Sensoraustrittsöffnung (G1, G2, G3), mit der der Sensor verbunden werden kann; und eine Abzweigleitung (16) im Gehäuse, die sich zwischen dem Hauptdurchgang und der Sensoraustrittsöffnung erstreckt, wobei die Abzweigleitung einen Ablassdurchgang (20) mit einer Austrittsablassöffnung (B1, B2, B3), ein erstes Absperrventil (17) in der Abzweigleitung (16) zwischen dem Hauptdurchgang und der Sensoraustrittsöffnung und ein Ablassabsperrventil (18) im Ablassdurchgang (20) zwischen dem Hauptdurchgang und der Austrittsablassöffnung aufweist.

2. Ventilverteiler nach Anspruch 1, bei dem ein zweites Absperrventil (19) in der Abzweigleitung (21) zwischen dem ersten Absperrventil (17) und der Sensoraustrittsöffnung (G1, G2, G3) bereitgestellt wird, wobei sich der Ablassdurchgang (20) von einer Position zwischen dem ersten (17) und dem zweiten Absperrventil (19) erstreckt.

3. Ventilvertailer nach Anspruch 1 oder 2, bei dem mindestens ein Ventilhohlraum im Ventilkörper für das Aufnehmen eines der Absperrventile definiert wird.

4. Ventilverteiler nach Anspruch 2, bei dem bereitgestellt wird: ein erster Ventilhohlraum, in dem das erste Absperrventil aufgenommen wird; ein zweiter Ventilhohlraum, in dem das zweite Absperrventil aufgenommen wird; und ein dritter Ventilhohlraum, in dem das Ablassabsperrventil aufgenommen wird.

5. Ventilverteiler nach Anspruch 4, bei dem ein erster Fluiddurchgang im Gehäuse zwischen dem Hauptdurchgang und dem ersten Ventilhohlraum definiert wird.

6. Ventilverteiler nach Anspruch 5, der außerdem einen zweiten Durchgang aufweist, der sich zwischen dem ersten Ventilhohlraum und dem zweiten Ventilhohlraum erstreckt.

7. Ventilverteiler nach Anspruch 6, der außerdem einen dritten Fluiddurchgang aufweist, der sich zwischen dem ersten Ventilhohlraum und dem dritten Ventilhohlraum erstreckt.

8. Ventilverteiler nach einem der Ansprüche 4 bis 7, der außerdem einen Sensoraustrittsdurchgang aufweist, der sich mindestens teilweise vom zweiten Ventithohlraum zur Sensoraustrittsöffnung erstreckt.

9. Ventilverteiler nach einem der Ansprüche 4 bis 8, bei dem sich der Ablassdurchgang vom dritten Ventilhohlraum zur Ablaßöffnung erstreckt.

10. Ventilverteiler nach einem der Ansprüche 3 bis 9, bei dem das Gehäuse des Verteilers eine obere Fläche aufweist, in der die Ventilhohlräume definiert werden.

11. Ventilverteiler nach Anspruch 10, bei dem das Gehäuse des Verteilers außerdem eine untere Fläche entgegengesetzt der oberen Fläche, gegenüberliegende Seitenflächen und gegenüberliegende Stimseitenflächen zwischen den Seitenflächen aufweist.

12. Ventilverteiler nach Anspruch 10, bei dem mindestens ein Teil der oberen Fläche relativ zur unteren Fläche geneigt ist.

13. Ventilverteiler nach Anspruch 12, bei dem der zweite und dritte Ventilhohlraum in den geneigten Teilen der oberen Fläche definiert werden.

14. Ventilverteiler nach einem der Ansprüche 11 bis 13, bei dem sich der Hauptdurchgang zwischen den Stimseitenflächen des Gehäuses erstreckt.

15. Ventilverteiler nach einem der Ansprüche 11 bis 14, bei dem die Ablassöffnung in einer Seitenfläche des Gehäuses definiert wird.

16. Ventilverteiler nach einem der Ansprüche 11 bis 15, bei dem die Messöffnung in einer Seitenfläche des Gehäuses definiert wird.

17. Ventilverteilerbaugruppe, die eine Vielzahl von Ventilverteilern nach einem der vorhergehenden Ansprüche aufweist, wobei die Vielzahl der Verteiler miteinander so verbunden ist, dass die jeweiligen Hauptdurchgänge ausgerichtet sind.

## Revendications

1. Collecteur de soupape (12, 13, 14), destiné à être connecté dans une conduite d'écoulement de fluide (10) et à être connecté à un capteur pour détecter une caractéristique d'écoulement du fluide, le collecteur comprenant un corps (22) dans lequel pénètre un passage principal (15) comportant une entrée et une sortie (8), destiné à être connecté dans la conduite d'écoulement (10), un orifice de sortie du capteur (G1, G2, G3) auquel le capteur peut être connecté, et une conduite de dérivation (16) dans le corps, s'étendant entre le passage principal et l'orifice de sortie du capteur, la conduite de dérivation comportant un passage de purge (20) avec un orifice de purge de sortie (B1. B2, B3), une première soupape d'isolement (17) dans la conduite de dérivation (16), entre le passage principal et l'orifice de sortie du capteur, et une soupape d'isolement de purge (18) dans le passage de purge (20), entre le passage principal et l'orifice de purge de sortie.

2. Collecteur de soupape selon la revendication 1, comportant une deuxième soupape d'isolement (19) dans la conduite de dérivation (21), entre la première soupape d'isolement (17) et l'orifice de sortie du capteur (G1, G2, G3), le passage de purge (20) s'étendant à partir d'une position située entre les première (17) et deuxième (19) soupapes d'isolement.

3. Collecteur de soupape selon les revendications 1 ou 2, dans lequel au moins une cavité de soupape est définie dans le corps de la soupape pour recevoir l'une des soupapes d'isolement.

4. Collecteur de soupape selon la revendication 2, comportant une première cavité de soupape, recevant la première soupape d'isolement, une deuxième cavité de soupape recevant la deuxième soupape d'isolement, et une troisième cavité de soupape recevant la soupape d'isolement de purge.

5. Collecteur de soupape selon la revendication 4, dans lequel un premier passage de fluide est défini dans le corps, entre le passage principal et la première cavité de soupape.

6. Collecteur de soupape selon la revendication 5, comprenant en outre un deuxième passage s'étendant entre la première cavité de soupape et la deuxième cavité de soupape.

7. Collecteur de soupape selon la revendication 6, comprenant en outre un troisième passage de fluide, s'étendant entre la première cavité de soupape et la troisième cavité de soupape.

8. Collecteur de soupape selon l'une quelconque des revendications 4 à 7, comprenant en outre un passage de sortie du capteur, s'étendant au moins en partie de la deuxième cavité de soupape vers l'orifice de sortie du capteur.

9. Collecteur de soupape selon l'une quelconque des revendications 4 à 8, dans lequel le passage de purge s'étend de la troisième cavité de soupape vers l'orifice de purge.

10. Collecteur de soupape selon l'une quelconque des revendications 3 à 9, dans lequel le corps du collecteur comprend une surface supérieure dans laquelle sont définies les cavités de soupape.

11. Collecteur de soupape selon la revendication 10, dans lequel le corps du collecteur comprend en outre une surface inférieure opposée à la surface supérieure, des surfaces latérales opposées et des surfaces d'extrémité opposées entre les surfaces latérales.

12. Collecteur de soupape selon la revendication 10, dans lequel au moins une partie de la surface supérieure est inclinée par rapport à la surface inférieure.

13. Collecteur de soupape selon la revendication 12, dans lequel les deuxième et troisième cavités de soupape sont définies sur les parties inclinées de la surface supérieure.

14. Collecteur de soupape selon l'une quelconque des revendications 11 à 13, dans lequel le passage principal s'étend entre les surfaces d'extrémité du corps.

15. Collecteur de soupape selon l'une quelconque des revendications 11 à 14, dans lequel l'orifice de purge est défini dans une surface latérale du corps.

16. Collecteur de soupape selon l'une quelconque des revendications 11 à 15, dans lequel l'orifice de calibrage est défini dans une surface latérale du corps.

17. Assemblage de collecteurs de soupape, comprenant plusieurs collecteurs de soupape selon l'une quelconque des revendications précédentes, les plusieurs collecteurs étant connectées les uns aux autres, de sorte que les passages principaux respectifs sont alignés.
